# EUROPEAN PATENT APPLICATION

(11) **EP 2 090 865 A2**
(43) Date of publication of application: **19.08.2009**
(21) Application number: 09462001.0
(22) Date of filing: 12.02.2009
(51) Int. Cl.: G01C 15/00

(54) **An inspection procedure for on-site inspection of scaffold systems in construction industry, and presenting an aid for implementing the procedure**

(30) Priority: 12.02.2008 HU 0800078
(71) Applicant: Gulyás, Tamás, 6100 Kiskunfélegyháza (HU)
(72) Inventor: Gulyás, Tamás, 6100 Kiskunfélegyháza (HU)

(57) **Abstract**

The subject of the invention is a procedure for pre-use or periodic on-site inspection of (mainly metal façade) scaffold systems in construction industry. Torsion and distortion of the frameworks constituting scaffold systems, positions of framework components related to one another, and deviation of the above components from the prescribed dimensions are checked by visual inspection and measurements. By means of connecting to the actually inspected framework of the scaffold system to be inspected on-site, a measuring device (i.e. rotary head laser) to measure factory data of the framework and the element, and a rod that can be steadily fitted by using a connector (clamp) being compatible with the different scaffold systems are used, due to which several precise measurements can be performed for one element without changing the position of the measuring device. By the above method, possible deformation, and deviation from prescribed dimensional tolerances, as well as their extent can be assessed.

## Description

The subject of the invention is a procedure for pre-use or periodic on-site inspection of - mainly façade - scaffold systems in construction industry, even in a set up state, and presenting an aid for implementing the procedure.

Mandatory pre-use inspection and periodic work protection safety inspection of - mainly metal, primarily aluminium - scaffold systems in construction industry are prescribed by decree standards. The above inspections shall be performed by work safety experts with special qualification, based on the parameters prescribed by the manufacturers. Based on prescriptions as stated in the relevant standards, the above inspections first of all relate to the dimensional and geometric tolerances of vertical frameworks being the main components of scaffold systems, furthermore, to the dimensional and geometric tolerances of other scaffold elements belonging to scaffold systems such as floor elements, railing elements, angular braces, end pieces, plank edgings, or ramps, also including the conditions of threaded legs, wall fasteners, clips, or ringbolts, furthermore, to the implementation of welding, and the inspection of surface quality conditions. Naturally, the results of the inspections shall be entered into a record, and the inspected frameworks shall be marked appropriately.

During the above inspection of the scaffold system, it will be checked whether or not
- horizontal elements are deformed, or buckled (distorted) to the extent due to which they cannot rest on the support elements without wobbling,
- welds are ruptured,
- vertical frameworks are turned out of their planes, and they can be inserted into one another without forcing,
- hanging brackets of railing elements are bent, plank edging is undamaged, or dented, besides, clamping handles can be used easily,
- angular braces are bent,
- components of the scaffold system are within the tolerance range given by the manufacturer.

Formerly, the above listed inspection tasks - with special respect to checking the frameworks, particularly in the case of a set up scaffold system - could not be performed on-site. Thus compliance of scaffold systems practically could only be assessed by means of laboratory inspection, as in the case of newly manufactured scaffold elements. Consequently, on-site safety inspections in most cases were limited to mere visual inspection.

For performing the inspections of the different scaffold types, beside the well-known measuring tools, and devices that are suitable for checking welding and surface quality, special inspection templates have been prepared as an aid. They include buffer pieces fastened onto a stable, usually fixed metal sheet. By matching the above buffer pieces to the different framework components, possible deviation of framework components from the prescribed dimensions, as well as the angular position, torsion, and distortion of the components related to one another, and other abnormalities endangering scaffold safety can be assessed and precisely measured. Although the above laboratory inspection template provides precise measurement results, it can only be used for a certain scaffold type. Its universal application is not possible, and due to its extent and weight, it cannot be used for on-site inspections.

The task to be solved by this study is elaborating a procedure, and an aid that is suitable for its implementation in order to make reliable and precise safety inspection of deformation and dimensional change in scaffold systems, mainly in frameworks (or in the elements of multielement frameworks) possible on the site of the construction, or on other location of use, even in the case of an already used, or set up scaffold system. In relation to this it should be mentioned that welding and surface condition inspections also being a part of safety inspection of the scaffold system can be performed on-site by means of visual inspection or using manual measuring tools, which can be supplemented by a laboratory inspection to provide more precise data if required.

The set task can be solved by accepting the fact that a quick, precise, and reliable on-site safety inspection can only be performed if an easily portable aid that at the same time makes precise adjustment possible is available to us.

Based on the above fact, in the invention, the set task will be implemented through two methods, by means of a connection to the actually inspected framework of the - possibly set up - scaffold system to be inspected on-site.

A (possibly rotary head laser) measuring device is steadily fitted in a fixed point to measure the internal contour line of the framework. By using the above measuring device, several precise measurements can be performed for one element without changing the position of the measuring device.

Furthermore, an aid will be used by which distorted or damaged state of scaffolding tubes (tubular scaffold, module scaffold systems) can be assessed - this is a (calibrated) rod that is suitable for measuring and can be fitted by using a rapid connector being compatible with the different scaffold systems, by the help of which precise measurements can be performed at several places for a certain column or tube element.

The aids that are suitable for the implementation of the above procedure include a stable (even steadily fitted, possibly rotary head laser) measuring device possibly mounted onto a multi-leg frame, and rod(s) (primarily made from metal or other material of similar characteristics) that can be steadily fitted by means of a connector being compatible with the different scaffold systems, making measurements possible. Thus several measurements can be performed in any direction and position for a certain element, without changing the position of the measuring devices. By comparing the data obtained after performing the measurements, possible deformation, or unacceptable deviation from the dimensional tolerances prescribed by the manufacturer can be assessed.

The aid that is suitable for the implementation of the above procedure is made from metal or other material of similar characteristics, the laser device that makes multidirectional measuring, and precise measurements for certain elements possible is placed on legs that provide a stable position alone, or on stable, fixed supporting points. Furthermore, an aid made from metal or other material of similar characteristics, and a rod that can be steadily fitted (e.g. by using a rapid connector to tubes or columns), and suitable for measuring is placed onto the selected element, and can be braced for permanent use and preciseness if required.

The invention will be described in more detail in relation to the implementation example, based on the drawing attached.

In the drawing
Figure 1 shows a laser measuring device that is suitable for the implementation of the procedure in the invention
Figure 2 illustrates fixing the rod suitable for measuring to the column, by using a connector.

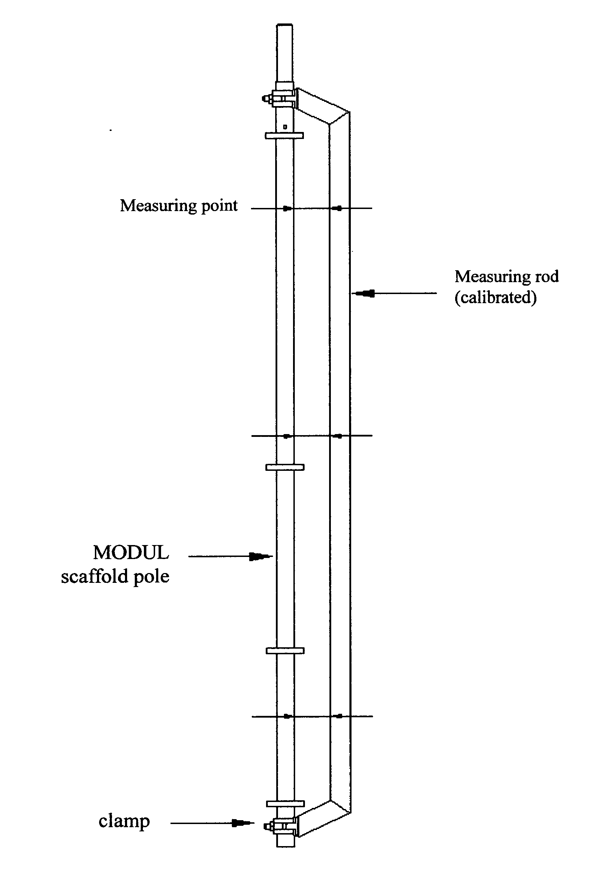

As Figure 1 shows, by means of the laser measuring device that is suitable for the implementation of the procedure in the invention, by possibly turning its head, measurements can be performed for the framework. By determining the measuring points, and comparing several measurements, possible deformation of a certain element can be assessed.

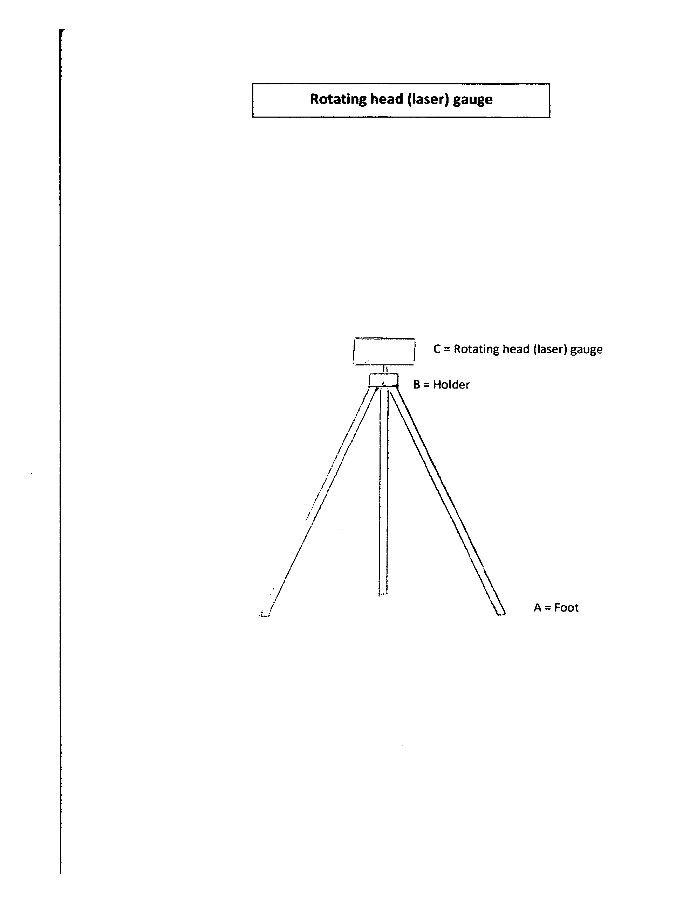

As Figure 2 shows, for the purpose of implementing the procedure in the invention, a rod that is suitable for measuring is fitted onto the selected column or tube element by using a connector (clump) thus measurements can be performed by the help of a length-measuring tool (calliper gauge, measuring block etc.). After several measurements have been performed, based on the obtained values, possible deformation can be assessed. In the procedure illustrated by Figure 2, primarily tubular and module scaffolds can be checked.

### Description of Figure 1:

As illustrated in Figure 1, the laser measuring device that is suitable for the implementation of the procedure in the invention is steadily fitted onto the scaffold element to be measured, and measuring points are determined. By summarizing, it can be stated that deviation, and deformation among the measuring points may not exceed the limit values of factory tolerance range. The assessment of compliance for a certain part needs several measuring points.

### Description of Figure 2:

| | |
|---|---|
| Modular scaffold pole: | surface to be measured |
| Clamp: | steady fixing position |
| Measuring rod (also calibrated): | as standard |
| Measuring place: | fixed measuring point |

As illustrated in Figure 2, the flat surface of the measuring rod that is suitable for the implementation of the procedure in the invention is parallel with the scaffold element to be inspected, whereas the lower and upper points of the measuring rod are steadily fitted to the element to be measured. The section between the two fitting points serves as the element to be measured. The measuring device is placed to the internal plane of the measuring rod, in fixed measuring points, and provides the measurement of the distance between the measuring rod and the surface to be measured. The deviation between the measuring points may not exceed the limit values of factory tolerance range. The assessment of compliance for the element needs several measuring points, however, minimum 3 measurements are required.

For the observation of the above, precise limit values, it is practical and recommended to use a calibrated measuring device.

Based on the data obtained from the above measurements, compliance of the measured element can be assessed, in compliance with the tolerance range given by the manufacturer.

The procedure in the invention will be implemented by the help of the above described measuring devices, as follows:

Mandatory pre-use on-site inspection and periodic safety inspection of - mainly metal, primarily aluminium - scaffold systems in construction industry is performed as outlined in the introduction part, during which the dimensional and geometric tolerances of frameworks, or multi-component frameworks being the main components of scaffold systems shall be inspected, furthermore, dimensional and geometric tolerances of other scaffold elements belonging to scaffold systems such as floor elements, railing elements, angular braces, end pieces, plank edgings, or ramps shall also be inspected, also including the conditions of threaded legs, wall fasteners, clips, or ringbolts. Furthermore, on-site inspection also relates to the implementation of welding, and the inspection of surface quality conditions.

On-site safety inspection of supplementary scaffold elements is basically performed by visual inspection and linear measurements, however, scaffold elements diameters may also be checked if required. Welding and surface conditions of scaffold elements can be inspected by using the appropriate manual measuring tools, which can be followed by a laboratory inspection in order to obtain more precise results, if proper reasons are given.

The most important new features during on-site safety inspection of scaffold systems are the steadily fitted (possibly rotary head laser) measuring device, and the measuring rod that can be steadily fitted by means of a connector (clamp) being compatible with different scaffold systems, thus several precise measurements can be performed for a certain element without changing the position of the measuring devices. For measuring scaffold elements, the measuring device shall always be placed in relation to the element to be measured in a way that it can provide precise measurement data. The measuring devices can be transported to the site without difficulty due to their light weight. Inspection tasks can be performed quickly and precisely even in the case of a deposited or set up scaffold. Before measurements are started, a fixed point shall be provided for the measuring device in all cases. When determining the fixed point, the place shall be suitable for providing precise measurements. Following this, measurements for the main parts of the element to be inspected can be performed. Based on the above data, comparing them with factory values, possible deformation, or dimensional deviation can be assessed.

In the case of a set up and already used scaffold system, mounting the measuring device onto the different frameworks to be inspected happens in a way that the measuring device is mounted onto the different levels one after the other, starting at the lower level.

If on-site inspection happens for a not yet assembled scaffold system, on the ground, fixed points shall also be provided for the inspected scaffold elements, by the help of a supporter.

Due to the procedure and aid in the above described invention, cost saving, efficient, and precise pre-use or periodic on-site inspection of the different scaffold systems in construction industry, mainly for metal façade scaffold systems becomes possible, even in the case of set up scaffolds.

## Claims

**1.** A procedure for pre-use or periodic on-site inspection of - mainly metal façade - scaffold systems in construction industry, even in a set up state. During the above procedure torsion, and distortion of the frameworks constituting scaffold systems, positions of framework components related to one another, and deviation of the above components from the prescribed dimensions are checked among others by visual inspection and measurements, **which can be characterized as follows:** by means of connecting to the actually inspected framework of the - possibly set up - scaffold to be inspected on-site, by the help of a steadily fitted (possibly rotary head laser) measuring device to check the dimensions of the framework, and a rod that can be steadily fitted by using a connector (clamp) being compatible with the different scaffold systems precise measurements can be performed for a certain scaffold element. With the dimensional tolerances given by the manufacturer taken into consideration, it can be assessed whether or not the elements are suitable for performing the different jobs.

**2.** An aid for pre-use or periodic on-site inspection of - mainly metal façade - scaffold systems in construction industry, for the inspections assessing torsion, and distortion of the frameworks constituting scaffold systems, positions of framework components related to one another, and deviation of the above components from the prescribed dimensions, **which can be characterized as follows:** the aid, a (possibly rotary head laser) measuring device steadily fitted in a fixed point to measure the internal contour line of the inspected framework, or a rod that can be steadily fitted by using a connector (clamp) being compatible with the different scaffold systems are used, due to which several precise measurements can be performed for one element without changing the position of the measuring device.
